(19) Europäisches Patentamt
European Patent Office
Office européen des brevets

(11) Publication number: **0 534 359 A1**

# (12) EUROPEAN PATENT APPLICATION

(21) Application number: **92116165.9**

(51) Int. Cl.$^5$: **C08G 75/02**

(22) Date of filing: **22.09.92**

(30) Priority: **23.09.91 US 764023**

(43) Date of publication of application:
**31.03.93 Bulletin 93/13**

(84) Designated Contracting States:
**AT BE DE DK ES FR GB GR IT NL SE**

(71) Applicant: **PHILLIPS PETROLEUM COMPANY**
**5th and Keeler**
**Bartlesville Oklahoma 74004(US)**

(72) Inventor: **Scoggins, Lacey Eugene**
**1310 Lariat Drive**
**Bartlesville, OK 74006(US)**
Inventor: **Hoover, Kenneth Charles**
**13052 E. 46th Street**
**Tulsa, OK 74134(US)**
Inventor: **Clark, Earl, Jr.**
**1003 Arbor Drive**
**Bartlesville, OK 74006(US)**
Inventor: **Reger, Roy Eugene**
**2309 St. Patrick**
**Deer Park, TX 77536(US)**

(74) Representative: **Dost, Wolfgang,**
**Dr.rer.nat.,Dipl.-Chem. et al**
**Patent- & Rechtsanwälte Bardehle .**
**Pagenberg . Dost . Altenburg . Frohwitter .**
**Geissler & Partner Galileiplatz 1 Postfach 86**
**06 20**
**W-8000 München 86 (DE)**

## (54) Process for preparing arylene sulfide polymers.

(57) A process for preparing arylene sulfide polymers which comprises the steps of contacting at least one first alkali metal aminoalkanoate with a molar excess relative to the aminoalkanoate of hydrogen sulfide in an enclosed reaction vessel under reaction conditions of time and temperature sufficient to react the hydrogen sulfide with the first alkali metal aminoalkanoate to produce alkali metal bisulfide and thereby form a first reaction product comprising hydrogen sulfide, alkali metal bisulfide, water and lactam, venting the enclosed reaction vessel to remove hydrogen sulfide present in the first reaction product, contacting the alkali metal bisulfide with at least one second alkali metal aminoalkanoate under reaction conditions of time and temperature sufficient to produce a second reaction product comprising water, lactam and a polymerizable complex of the second alkali metal aminoalkanoate and the alkali metal bisulfide, dehydrating the second reaction product, contacting the dehydrated second reaction product with at least one dihaloaromatic compound to form a polymerization mixture, and subjecting the polymerization mixture to polymerization conditions of time and temperature sufficient to produce the arylene sulfide polymer.

EP 0 534 359 A1

## Background of the Invention

This invention relates to the production of arylene sulfide polymers. In one aspect, this invention relates to the production of phenylene sulfide polymers.

Arylene sulfide polymers are known in the art and processes for making these polymers utilizing hydrogen sulfide as the sulfur source and alkali metal aminoalkanoates are disclosed in U.S. Patent Nos. 3,884,884; 4,060,520; and 4,324,886. Although these patents represent significant and valuable advances in the art, processes for producing arylene sulfide polymers utilizing a dehydration step prior to reacting the hydrogen sulfide with the alkali metal aminoalkanoate suffer from the problems of requiring accurate measurement of hydrogen sulfide and inability to achieve the desired water content at the beginning of the polymerization. There is need for a simplified process for providing arylene sulfide polymers which avoids the above problems.

## Summary of the Invention

It is an object of the invention to provide a process for producing arylene sulfide polymer having improved control of polymerization reaction stoichiometry by eliminating the need to accurately measure hydrogen sulfide. It is a further object of the invention to provide a process for producing increased molecular weight arylene sulfide polymer utilizing hydrogen sulfide and alkali metal aminoalkanoates by improving the control of the amount of water present at the beginning of the polymerization.

According to the invention, a process for preparing arylene sulfide polymers is provided which comprises the steps of contacting at least one first alkali metal aminoalkanoate with a molar excess relative to said alkali metal aminoalkanoate of hydrogen sulfide in an enclosed reaction vessel under reaction conditions of time and temperature sufficient to react the hydrogen sulfide with the first alkali metal aminoalkanoate to produce alkali metal bisulfide and thereby form a first reaction product comprising hydrogen sulfide, alkali metal bisulfide, water and lactam, venting the enclosed reaction vessel to remove the hydrogen sulfide present in the first reaction product, contacting the alkali metal bisulfide with at least one second alkali metal aminoalkanoate under reaction conditions of time and temperature sufficient to produce a second reaction product comprising water, lactam and a polymerizable complex of the second alkali metal aminoalkanoate and the alkali metal bisulfide, dehydrating the second reaction product, contacting the dehydrated second reaction product with at least one dihaloaromatic compound to form a polymerization mixture, and subjecting the polymerization mixture to polymerization conditions of time and temperature sufficient to produce the arylene sulfide polymer. In a further embodiment, prior to venting the enclosed reaction vessel to remove hydrogen sulfide from the first reaction product, the first reaction product is cooled to a temperature such that all components of the first reaction product other than the hydrogen sulfide remain substantially in the liquid phase upon venting.

## Detailed Description of the Invention

This invention relates to a process for preparing arylene sulfide polymers comprising the steps of: (a) contacting at least one first alkali metal aminoalkanoate with a molar excess relative to the alkali metal aminoalkanoate of hydrogen sulfide in an enclosed reaction vessel under reaction conditions of time and temperature sufficient to react the hydrogen sulfide with the first alkali metal aminoalkanoate to produce alkali metal bisulfide and thereby form a first reaction product comprising hydrogen sulfide, alkali metal bisulfide, water and lactam (b) venting the enclosed reaction vessel to remove the hydrogen sulfide present in the first reaction production, (c) contacting the alkali metal bisulfide with at least one second alkali metal aminoalkanoate under reaction conditions of time and temperature sufficient to produce a second reaction product comprising water, lactam and a polymerizable complex of the second alkali metal aminoalkanoate and the alkali metal bisulfide, (d) dehydrating the second reaction product, (e) contacting the dehydrated second reaction product with at least one dihaloaromatic compound to form a polymerization mixture, and (f) subjecting the polymerization mixture to polymerization conditions of time and temperature sufficient to produce an arylene sulfide polymer. The arylene sulfide polymers made according to this invention are readily recoverable and well suited for use in applications such as film, fiber, molding and composites.

The alkali metal aminoalkanoates of the invention can be represented by the formula $R'N(CR'_2)_tCO_2M$, where each R' is selected from the group consisting of hydrogen and hydrocarbyl radicals selected from alkyl, cycloalkyl, and aryl, and combinations thereof such as alkaryl, aralkyl, and the like, the number of carbon atoms in each of the hydrocarbyl radicals is in the range of 1 to about 12, M is an alkali metal selected from lithium, sodium, potassium, rubidium, and cesium, t is an integer having a value of 2 to about

12, and the total number of carbon atoms in each molecule of the alkali metal aminoalkanoate is within the range of 3 to about 24. The alkali metal aminoalkanoates of the invention can be produced in situ by reacting an alkali metal hydroxide with a lactam in the presence of water.

Examples of some alkali metal aminoalkanoates which can be employed in the process of the invention include lithium aminoacetate, sodium N,N-dimethyl-2-aminopropionate, potassium N-ethyl-3-cyclopentyl-3-aminopropionate, sodium N-methyl-4-aminobutyrate, sodium N-methyl-6-aminohexanoate, rubidium N-isopropyl-3-phenyl-5-aminopentanoate, cesium N-butyl-N-cyclohexyl-3-isopropyl-6-aminohexanoate, potassium N-phenyl-3-butyl-7-aminooctanoate, sodium N-cyclopentyl-4-hexyl-10-aminodecanoate, lithium N-hexyl-6-pentyl-13-aminotridecanoate, sodium N-decyl-4-aminododecanoate, potassium N-nonyl-2-aminotetradecanoate, sodium N-o-tolyl-3-amino-4-phenylbutyrate, rubidium N,N-dibenyzl-2-p-tolyl-3-aminopropionate, cesium 4-aminobutyrate, sodium 5-aminopentanoate, potassium 6-aminohexanoate, sodium N-ethyl-4-aminobutyrate, sodium N-cyclohexyl-4-aminobutyrate, and the like and mixtures of any two of more thereof. The presently preferred alkali metal aminoalkanoate is sodium N-methyl-4-aminobutyrate, also known as sodium 4-(N-methylamino)butyrate, because of its effectiveness.

Alkali metal hydroxides that can be employed according to the invention include lithium hydroxide, sodium hydroxide, potassium hydroxide, rubidium hydroxide, cesium hydroxide, and mixtures of any two or more thereof. Sodium hydroxide is preferred because of ready availability and good results obtained using this compound. The alkali metal hydroxide can conveniently be utilized in the process of the invention as an aqueous solution. For example, an aqueous solution of sodium hydroxide having about 50 weight percent sodium hydroxide is convenient to use.

The lactams that can be employed according to the invention can be represented by the formula

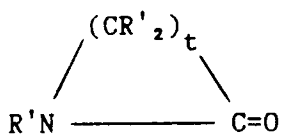 ,

wherein each R' and t are as defined above, and the total number of carbon atoms in each molecule of the lactam is within the range of 3 to about 24.

Examples of some lactams which can be employed according to the invention include 2-azetidinone, 2-pyrrolidone, 2-piperidone, ϵ-caprolactam, N-methyl-2-pyrrolidone, N-ethyl-2-piperidone, N-isopropyl-ϵ-caprolactam, N-dodecyl-3-octyl-2-pyrrolidone, N-cyclopentyl-4-dodecyl-2-piperidone, N-ethyl-2-pyrrolidone, N-cyclohexyl-2-pyrrolidone, N-methyl-ϵ-caprolactam, N-phenyl-3-butyl-4-benzyl-2-pyrrolidone, N-m-tolyl-2-azetidinone, N-benzyl-4-o-tolyl-2-piperidone, 3-phenyl-2-pyrrolidone, lactam of N-butyl-4-cyclohexyl-7-methyl-8-aminooctanoic acid, lactam of N-octyl-3-ethyl-5-isopropyl-7-aminoheptanoic acid, lactam of 10-aminodecanoic acid, lactam of 13-aminotridecanoic acid, and the like and mixtures of any two or more thereof. N-methyl-2-pyrrolidone is currently preferred because of the good results obtained using this lactam.

The amount of lactam employed in the embodiment where the alkali metal aminoalkanoate is produced by reacting an alkali metal hydroxide with a lactam in the presence of water can be conveniently expressed in terms of a molar ratio based on the alkali metal hydroxide employed. Broadly, the molar ratio of lactam to alkali metal hydroxide will be about 1:1 to about 25:1, preferably about 1.1:1 to about 12:1.

In accordance with the invention, hydrogen sulfide is employed in a molar excess relative to the first alkali metal aminoalkanoate during the production of alkali metal bisulfide. The amount of hydrogen sulfide employed can be expressed in terms of a molar ratio based on the first alkali metal aminoalkanoate employed. A molar ratio of hydrogen sulfide to first alkali metal aminoalkanoate during the production of alkali metal bisulfide will be at least about 1.01:1, preferably at least about 1.02:1, and most preferably at least 1.05:1.

The alkali metal bisulfides that can be produced according to the invention include lithium bisulfide, sodium bisulfide, potassium bisulfide, rubidium bisulfide, cesium bisulfide, and mixtures of any two or more thereof. Sodium bisulfide is preferred because of good results obtained therewith.

The reaction conditions for the production of the alkali metal bisulfide include the utilization of a temperature in the range of about 150°C to about 250°C, preferably about 180°C to about 220°C and a time in the range of about 10 minutes to about 4 hours, preferably about 40 minutes to about 3 hours. In a preferred embodiment, the reaction of hydrogen sulfide with the first alkali metal aminoalkanoate in the enclosed reaction vessel is done in the presence of an inert gas such that the pressure in the enclosed reaction vessel is increased to promote the reaction of the hydrogen sulfide present in the enclosed

reaction vessel. The pressure increase caused by the utilization of an inert gas is preferably about 50 to about 100 psig. The inert gas will generally be selected from nitrogen, helium, neon and argon. The currently preferred inert gas is nitrogen due to its cost and availability.

In the embodiment where the alkali metal aminoalkanoate is produced by contacting an alkali metal hydroxide, a lactam and water, the reaction conditions include the utilization of a temperature in the range of about 105°C to about 205°C and a time in the range of about 1 minute to about 1 hour. Although pressure is not limiting in the formation of the alkali metal aminoalkanoate it is preferred that the pressure be sufficient to maintain all the components substantially in the liquid phase.

The enclosed reaction vessel containing the first reaction product is vented to remove the hydrogen sulfide present in the first reaction product. The venting step enables the process of the invention to be conducted without requiring accurate measurement of the hydrogen sulfide used to form the alkali metal bisulfide. In a preferred embodiment, the enclosed reaction vessel containing the first reaction product is cooled prior to venting to a temperature such that all components of the first reaction product other than hydrogen sulfide remain substantially in the liquid phase upon venting. The temperature to which the first reaction product is cooled prior to venting is preferably below about 150°C and most preferably below about 125°C.

The alkali metal bisulfide is contacted with a second alkali metal aminoalkanoate to produce a second reaction product comprising water, lactam and a polymerizable complex of the second alkali metal aminoalkanoate and the alkali metal bisulfide. The reaction conditions for the production of the polymerizable complex of alkali metal aminoalkanoate and alkali metal bisulfide include the utilization of a temperature in the range of about 100°C to about 250°C, preferably about 150°C to about 225°C, and a time in the range of about 1 minute to about 1 hour, preferably about 5 minutes to about 15 minutes. Although pressure is not limiting in the formation of the polymerizable complex, it is preferred that the pressure be sufficient to maintain the components of the second reaction product in the liquid phase.

The second reaction product is then dehydrated and subsequently contacted with at least one dihaloaromatic compound to form a polymerization mixture. The dehydration step can be performed in any manner known to those of ordinary skill in the art which results in removing at least a portion of the water from the second reaction product. One method is to heat the second reaction product to a temperature in the range of about 120°C to about 210°C for a time in the range of about 5 minutes to about 6 hours while providing means to remove the water vaporized by such heating.

The dihaloaromatic compounds that can be employed in the process of the invention are compounds having 6 to about 22 carbon atoms per molecule. The halogen substituent on the dihaloaromatic compound can be selected from the group consisting of chlorine, bromine, and iodine. Preferably, the dihaloaromatic compound will be dihalo-substituted benzene and more preferably dichloro- substituted benzene. Particularly good results are expected when the dihaloaromatic compound is selected from the group consisting of p-dichlorobenzene and mixtures of p-dichlorobenzene with a total of about 0.1 to about 10 mole percent of at least one of m-dichlorobenzene, o-dichlorobezene, and alkyl-substituted dichlorobenzene having the formula

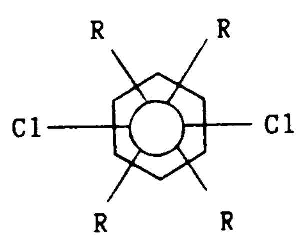

wherein each R is individually selected from hydrogen or an alkyl group having 1 to about 4 carbon atoms and at least one R is not hydrogen.

Examples of some suitable dihaloaromatic compounds include p-dichlorobenzene, p-dibromobenzene, p-diiodobenzene, 1-chloro-4-bromobenzene, 1-chloro-4-iodobenzene, 1-bromo-4-iodobenzene, 2,5-dichlorotoluene, 2,5-dichloro-p-xylene, 1-ethyl-4-isopropyl-2,5-dibromobenzene, 1,2,4,5-tetramethyl-3,6-dichlorobenzene, 1,2,4,5-tetrabutyl-3,6-dichlorobenzene, 1-ethyl-3-butyl-2,5-dichlorobenzene, 1-ethyl-2,5-diiodobenzene, 1-butyl-2,5-dichlorobenzene, 1-butyl-4-ethyl-2,5-dibromobenzene, o-dichlorobenzene, m-dichlorobenzene and the like, and mixtures of any two or more thereof.

The amount of dihaloaromatic compound employed according to the invention can be conveniently expressed in terms of a molar ratio based on the amount of alkali metal bisulfide in the first reaction

product. Broadly, the molar ratio of dihaloaromatic compound to alkali metal bisulfide will be about 0.9:1 to about 1.2:1, and preferably about 0.95:1 to about 1.05:1.

The amount of lactam employed according to the invention can be conveniently expressed in terms of a molar ratio based on the alkali metal bisulfide in the first reaction product. Broadly, the molar ratio of lactam to alkali metal bisulfide will be about 1:1 to about 25:1, preferably about 3:1 to about 12:1.

The amount of second alkali metal aminoalkanoate employed according to the invention can be conveniently expressed in terms of a molar ratio based on the alkali metal bisulfide in the first reaction product. Broadly, the molar ratio of second alkali metal aminoalkanoate to alkali metal bisulfide will be about 0.5:1 to about 1.5:1, preferably about 0.9:1 to about 1.1:1.

The molar amount of alkali metal bisulfide in the first reaction product can be chosen to be essentially equal to the molar amount of first alkali metal aminoalkanoate employed since the first alkali metal aminoalkanoate is the limiting reagent in the reaction of the first alkali metal aminoalkanoate with hydrogen sulfide to form the alkali metal bisulfide, and since the reaction conditions of time and temperature can be chosen to result in substantially complete conversion of the first alkali metal aminoalkanoate to the alkali metal bisulfide.

It is optional, according to the process of the invention, to employ an alkali metal carboxylate as a component in the polymerization mixture. If employed, it is convenient to employ the alkali metal carboxylate in the charge of components for preparing the first reaction product or the second reaction product such that the alkali metal carboxylate is present prior to dehydration. The molar ratio of alkali metal carboxylate to alkali metal bisulfide in the first reaction product can vary over a wide range but generally will be within the range of about 0.002:1 to about 4:1, preferably about 0.1:1 to about 2:1.

Suitable alkali metal carboxylates can be represented by the formula $R'''CO_2M$ wherein R''' is a hydrocarbyl radical selected from alkyl, cycloalkyl, and aryl and combinations thereof such as alkaryl, aralkyl and the like, the number of carbon atoms in said R''' is within the range of 1 to about 20, and M is as defined above.

Examples of some alkali metal carboxylates which can be employed include lithium acetate, sodium acetate, sodium formate, potassium acetate, lithium propionate, sodium propionate, lithium 2-methylpropionate, rubidium butyrate, sodium valerate, cesium hexanoate, lithium heptanoate, lithium 2-methyloctanoate, potassium dodecanoate, sodium octadecanoate, lithium cyclohexane carboxylate, potassium cyclohexyl acetate, potassium benzoate, lithium benzoate, sodium benzoate, potassium m-toluate, lithium phenyl acetate, sodium 4-phenylcyclohexane carboxylate, potassium p-tolyl acetate, and the like, and mixtures of any two or more thereof. The preferred alkali metal carboxylate, due to its effectiveness, commercial availability and economics, is sodium acetate.

It is also optional, according to the process of the invention, to employ a polyhaloaromatic compound as a component in the polymerization step. The amount of polyhaloaromatic compound which may be employed can be conveniently expressed in terms of a molar ratio based on the alkali metal bisulfide in the first reaction product. Broadly, the molar ratio of polyhaloaromatic compound to alkali metal bisulfide will be about 0.001:1 to about 0.02:1, preferably about 0.002:1 to about 0.01:1, and most preferably about 0.003:1 to about 0.008:1.

Polyhaloaromatic compounds that can be employed in the process of the invention can be represented by the formula

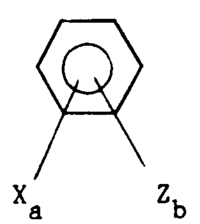

wherein X is a halogen selected from the group consisting of fluorine, chlorine, bromine and iodine, a is 3 or 4, and a + b is 6. When a is 3, each Z is preferably hydrogen. When a is 4, Z can be hydrogen, or any of a variety of substituents including but not limited to alkyl radicals having 1 to about 4 carbon atoms, $-NH_2$ and -OR'' wherein R'' is an alkyl radical having 1 to about 4 carbon atoms.

Examples of suitable polyhaloaromatic compounds that can be employed in the process of the invention include 1,2,3-trichlorobenzene, 1,2,4-trichlorobenzene, 1,3,5-trichlorobenzene, 1,2,3-trifluorobenzene, 1,2,4-trifluorobenzene, 1,3,5-trifluorobenzene, 1,2,3,4-tetrachlorobenzene, 1,2,4,5-tetrachlorobenzene,

1,2,3,5-tetrachlorobenzene, 1,2,3,4-tetrafluorobenzene, 1,2,4,5-tetrafluorobenzene, 1,2,3,5-tetrafluorobenzene, 1,3-dichloro-4-fluorobenzene, 1,3-dichloro-2-fluorobenzene, 2,3,4,5-tetrachloroaniline, 2,3,5,6-tetrachloroaniline, 2,3,4,5-tetrachlorotoluene, 2,3,4,6-tetrachlorotoluene, 2,3,5,6-tetrachlorotoluene, 1-methoxy-2,3,5,6-tetrachlorobenzene, 2-methoxy-1,3,4,5-tetrachlorobenzene, 1-methoxy-2,3,5-trichlorobenzene, and the like, and mixtures of any two or more thereof. The presently preferred polyhaloaromatic compound is 1,2,4-trichlorobenzene because of its effectiveness, economics and commercial availability.

Suitable polymerization conditions include a reaction temperature which can vary over a wide range but will generally be within the range of about 200 °C to about 450 °C, preferably from about 210 °C to about 350 °C. The reaction time will be within the range of about 10 minutes to about 72 hours, preferably about 1 hour to about 8 hours. The pressure employed should be sufficient to maintain the polymerization reaction mixture substantially in the liquid phase. The pressure will generally be in the range of about 0 psig to about 400 psig, preferably about 150 psig to about 250 psig.

Although various known methods can be employed for the recovery of the arylene sulfide polymers made according to the invention, it is preferred to employ a method, such as the "water quench" process described in U.S. Patent No. 4,415,729, wherein the polymerization mixture is contacted at a temperature above that at which the arylene sulfide is soluble in the polymerization mixture with a sufficient amount of a separation agent that is soluble in the lactam and is a non-solvent for the arylene sulfide polymer, e.g. water, to cause or enhance a phase separation. Subsequent cooling of the quenched, phase-separated mixture produces a slurry of particulate arylene sulfide polymer in the lactam which can be filtered to recover the particulate arylene sulfide polymer. The separated polymer can be slurried with a liquid diluent such as water in which the alkali metal halides and other soluble impurities are dissolved. The liquid diluent is removed with dissolved impurities such as by filtration leaving a particulate arylene sulfide polymer. This washing process can be repeated until the desired level of arylene sulfide polymer purity is attained. Another known method that can be employed for the recovery of crystalline arylene sulfide polymers prepared by this invention is the process described in U.S. Patent No. 3,800,845, wherein the heated polymerization mixture is subjected to an isothermal evaporation reducing the pressure on the polymerization mixture from reaction pressure sufficiently to evaporate essentially all of the water and approximately 1/3 of the lactam and then the concentrated polymerization mixture is removed to another vessel by flashing the mixture adiabatically to about atmospheric pressure to remove essentially all of the lactam from the arylene sulfide polymer. The flashed reaction mixture residue can be slurried with a liquid diluent such as water in which the alkali metal halides and other soluble impurities are dissolved. The liquid diluent is removed with dissolved impurities such as by filtration leaving a particulate arylene sulfide polymer. This washing process can be repeated until the desired level of arylene sulfide polymer purity is attained. It is preferable that at least a portion of the washing be conducted at an elevated temperature within the range of about 130 °C to about 250 °C. In addition, it is presently preferred to employ an organic acid, particularly acetic acid, during at least one of the above-described washing steps. Such a process for treating with an organic acid is described in U.S. Patent No. 4,801,664.

The arylene sulfide polymers produced by the process of the invention can be blended with fillers, fibers, pigments, extenders, other polymers and the like. The arylene sulfide polymers can be cured to provide cured products having high thermal stability and good chemical resistance, wherein curing is defined as a distinct process step after polymer drying comprising a thermal treatment on the polymer in the presence of an oxygen-containing atmosphere. The preferred oxygen-containing atmosphere is air. The arylene sulfide polymers of the invention are useful in the production of film, fibers, molded objects, and composites.

## Examples

In the following examples, the polyphenylene sulfide (PPS) melt flow rates were determined by the method of ASTM D 1238, Condition 316/5.0, modified to use a five minute preheat, with the value of flow rate being expressed as grams per 10 minutes (g/10 min).

Polymer ash levels were determined by burning a weighed sample of the polymer in a platinum dish. Residual carbonaceous material was removed by heating the platinum dish and contents at 540 °C in a muffle furnace. The weight of the residue (ash) is expressed as a percentage of the original weight (wt. %) of the polymer.

Example I

This example describes the preparation of a high molecular weight PPS using the process of this invention with hydrogen sulfide as the sulfur source. To a stirred, 150 liter (L) reactor was charged 34.31 kg of an aqueous sodium hydroxide (NeOH) mixture containing 48.94 weight percent NaOH and 50.7 L of N-methyl-2-pyrrolidone (NMP). The mixture was heated with stirring to about 150 °C and held at that temperature for 45 minutes.

After the mixture had been transferred to a 340 L reactor containing 10.43 kg of solid sodium acetate and flushed with 16.3 L of NMP, 14.5 kg of hydrogen sulfide was added below the liquid level of the mixture from a Matheson CP grade cylinder over a two hour time period. During the addition, the temperature increased from about 150 °C to about 175 °C. At the conclusion of the hydrogen sulfide addition, the reactor gauge pressure was 386 kPa and the mixture was held at 165 °C for 60 minutes. Then, the reactor was cooled to 120 °C and excess hydrogen sulfide was vented from the reactor.

A second mixture of 33.30 kg of aqueous NaOH and 49.2 L of NMP was prepared in the 150 L reactor as described above and was charged to the mixture described above in the 340 L reactor followed by a flush of 18.9 L of NMP. This mixture was dehydrated to remove a portion of the water. Dehydration took about 97 minutes and the temperature went from about 150 °C to about 206 °C. After dehydration, the mole ratio of NaOH/NaSH was 1.09/1.

To the dehydrated mixture was added 61.73 kg of p-dichlorobenzene (DCB). The mixture was heated to 227 °C and held at that temperature for 4 hours and was then heated to 263 °C and held at that temperature for 3 hours. At the end of the 3 hour hold at 263 °C, a small sample of the polymerization mixture was removed from the reactor and analyzed for DCB content by gas chromatography. The amount of unreacted DCB in the NMP was 1.2 weight percent based on the DCB and NMP only. Then, the mixture was cooled to 128 °C and 37.85 L of deionized water was added to the reactor.

The reactor product was removed and screened and the solid PPS was washed four times with deionized water and once with hot (about 177 °C) deionized water. After drying, the PPS product from Run 1 had a flow rate of 199 g/10 minutes and an ash level of 0.34 wt. %.

Example II

Two more runs were carried out in a manner similar to that described in Run 1 of Example I with variations in reactant levels and conditions.

In Run 2, the first mixture of aqueous NaOH and NMP was prepared from 34.26 kg of aqueous NaOH and 50.7 L of NMP. To the first mixture was added 14.47 kg of hydrogen sulfide over a 2 hour time period at 167 °C. The mixture was heated to about 200 °C and held for 60 minutes. After the mixture had been cooled to 127 °C, 230 g of hydrogen sulfide was added to the reactor and the temperature was held for 15 minutes at 127 °C and then excess hydrogen sulfide was vented from the reactor.

The second aqueous NaOH-NMP mixture was prepared from 33.34 kg NaOH and 49.2 L of NMP. 61.75 kg of DCB was added to the dehydrated mixture.

In Run 3, the first aqueous NaOH-NMP mixture was prepared from 34.29 kg of NaOH and 50.7 L of NMP. 14.56 kg of hydrogen sulfide was added to the first mixture over a 23 minute time period. Nitrogen was passed through the hydrogen sulfide addition line to increase the reactor gauge pressure to 896 kPa. The reactor temperature was increased to 200 °C, held for 20 minutes, and the reactor pressure was then increased by nitrogen to 1138 kPa and held for 10 minutes. To the reactor was added 140 g of hydrogen sulfide and the mixture was held at 200 °C for 10 minutes, cooled to 127 °C, and then excess hydrogen sulfide vented from the reactor.

The second mixture of aqueous NaOH and NMP was prepared from 33.32 kg of NaOH and 49.2 L of NMP. 61.93 kg of DCB was added to the dehydrated mixture.

The results of the two runs of this example are summarized in Table I along with results of Run 1 from Example I. High molecular weight PPS was produced in each run, even with variations in the NaOH/NaSH ratio and the level of unreacted DCB.

Table I

| PPS Polymerizations | | | | |
|---|---|---|---|---|
| Run | NaOH/NaSH Mole Ratio[a] | Unreacted DCB,[b] Wt. % | Flow Rate, g/10 min. | Ash, Wt. % |
| 1 | 1.09/1 | 1.2 | 199 | 0.34 |
| 2 | 1.04/1 | 0.58 | 92 | 0.34 |
| 3 | 1.02/1 | 0.63 | 128 | 0.25 |

[a] After dehydration
[b] Expressed as weight percent unreacted DCB in NMP solution.

Example III

Several PPS polymerization runs were carried out according to the process of the present invention with a different type of polymer recovery.

In Run 4, 34.314 kg of an aqueous NeOH mixture containing 48.94 weight percent NaOH and 50.7 L of NMP were charged to a 150 L reactor. The mixture was heated with stirring to about 150° C and held at that temperature for 49 minutes.

After the above mixture had been transferred to a 340 L reactor containing 10.43 kg of solid sodium acetate and flushed with 16.3 L of NMP, 14.65 kg of hydrogen sulfide was added below the liquid level of the mixture from a Matheson CP grade cylinder over a 31 minute time period. At the conclusion of the hydrogen sulfide addition, the reactor gauge pressure was 738 kPa and the mixture was heated to 198° C and held for 57 minutes. After 30 minutes at 198 C, 140 g of hydrogen sulfide was added. The mixture was cooled to 120° C and excess hydrogen sulfide was vented from the reactor.

A second mixture of 33.306 kg of aqueous NeOH and 49.2 L of NMP was prepared in the 150 L reactor as described above and was charged to the mixture in the 340 L reactor followed by a flush of 18.9 L of NMP. This mixture was dehydrated to remove a portion of the water. Dehydration took about 83 min and the temperature went from 148° C to about 204° C. After dehydration, the mole ratio of NaOH/NaSH was 1.00/1.

To the dehydrated mixture was added 62.588 kg of DCB. The mixture was heated to 227° C and held for 4 hours and was then heated to 265° C and held for 3 hours. At the end of the hold at 265° C, the unreacted DCB was found to be 0.53 weight percent in NMP.

Most of the water produced during the polymerization and a portion of the NMP was removed from the reactor by holding the temperature at 265° C, opening a valve, and venting the pressure down to 483 kPa gauge. A condensed liquid weighing 22.0 kg was collected over the 49 minute time period of this venting. The reactor temperature was then increased to 282° C and the reactor contents were flashed over a 98 minute time period to a vessel at 2 kPa gauge pressure from which the NMP was removed as a vapor.

The solid reactor product was washed three times with deionized water and filtered, with am 80° C deionized water rinse, after each wash. The first wash was at ambient temperature, the second at about 177° C with 150 mL of acetic acid added to the water, and the third was water only at 177° C. The dried product from Run 4 had a flow rate of 535 g/10 min and an ash level of 0.30 wt. %.

Run 5 was carried out in a manner similar to that described in Run 4, except that no venting of water and NMP was done prior to the flashing of the reactor contents.

The first mixture of aqueous NaOH and NMP was prepared from 34.30 kg of aqueous NaOH and 50.7 L of NMP. To the first mixture was added 14.51 kg of hydrogen sulfide over a 22 minute time period. After a 30 minute hold at 198° C, 230 g of hydrogen sulfide was added. As in Run 4, the mixture was cooled to 120° C and excess hydrogen sulfide was vented.

The second mixture of aqueous NaOH and NMP was prepared from 33.32 kg of aqueous NaOH and 49.2 L of NMP. To the dehydrated mixture was added 62.73 kg of DCB.

In Run 6, the polymerization was carried out in a manner similar to that described above for Run 5, except that the dehydrated mixture was heated to 227° C and held for 2 hours, then heated to 265° C and held for 4 hours.

The first mixture of aqueous NaOH and NMP was prepared from 34.24 kg of aqueous NaOH and 50.7 L of NMP. To the first mixture was added 14.61 kg of hydrogen sulfide over a 22 minute time period. After a 30 minute hold at 198° C, 320 g of hydrogen sulfide was added. As in Runs 4 and 5, the mixture was cooled to 120° C and excess hydrogen sulfide was vented.

The second aqueous NaOH-NMP mixture was prepared from 33.31 kg of NaOH and 49.2 L of NMP. To the dehydrated mixture was added 62.77 kg of DCB.

The results of the three polymerizations of this example are summarized in Table II. High molecular weight polymer is produced using an alternate polymer recovery despite variations in NaOH/NaSH ratios and unreacted DCB levels.

Table II

| PPS Polymerizations | | | | |
|---|---|---|---|---|
| Run | NaOH/NaSH Mole Ratio[a] | Unreacted DCB,[b] Wt. % | Flow Rate, g/10 min. | Ash, Wt. % |
| 4 | 1.00/1 | 0.53 | 535 | 0.30 |
| 5 | 0.968/1 | 0.62 | 208[c] | 0.18 |
| 6 | 1.02/1 | 0.55 | 339 | 0.10 |

[a] After dehydration
[b] Expressed as weight percent unreacted DCB in NMP solution.
[c] Average of two measured melt flow rates.

## Example IV

This example presents a control PPS polymerization that utilizes a polymer recovery similar to that described in Examples I and II.

To a stirred, 150 L reactor was charged 33.25 kg of an aqueous NaOH mixture (48.94 wt. % NaOH) and 39.90 kg of an aqueous NaSH mixture (58.962 wt. % NaSH, 0.124 wt. % NaOH). The mixture was heated with stirring to about 120° C and held at that temperature for 10 min. After the mixture had been transferred to a 340 L reactor containing 10.43 kg of sodium acetate and 67.0 L of NMP, it was followed by flushing with 68.1 L of NMP. The entire mixture was dehydrated to remove a portion of the water.

DCB (61.771 kg) was charged to the dehydrated mixture and the mixture was heated to about 227° C and held for 4 hrs. The mixture was then heated to about 264° C and held for 3 hrs. At the conclusion of the 264° C hold, a small sample of the reactor mixture was removed from the reactor and an analysis showed that the amount of unreacted DCB was 0.59 wt. % in the NMP.

The polymerization mixture was recovered as described in Example I to produce Polymer 7 with a flow rate of 74 g/10 min and an ash level of 0.29 wt %.

## Example V

This example describes a control polymerization using a polymer recovery method like that described in Example III.

To a stirred, 150 L reactor was charged 32.50 kg of an aqueous NaOH mixture (49.94 wt. % NaOH) and 40.01 kg of an aqueous NaSH mixture (58.83 wt. % NaSH, 0.144 wt. % NaOH). The mixture was heated with stirring to about 120° C and held at that temperature for 10 min. After the mixture had been transferred to a 340 L reactor containing 10.43 kg of sodium acetate and 67.0 L of NMP, it was followed by flushing with 68.1 L of NMP. The entire mixture was dehydrated to remove a portion of the water.

DCB (61.92 kg) was charged to the dehydrated mixture and the mixture was heated to about 227° C and held for 4 hrs. The mixture was then heated to about 264° C and held for 2 hrs. At the conclusion of the 264° C hold, a small sample was removed from the reactor and an analysis showed that the amount of unreacted DCB was 0.93 wt. % in the NMP.

The polymerization mixture was recovered as described in Example III except that no acetic acid was added to the second wash, and 100 mL of acetic acid was added to the last wash. The dried product (Polymer 8) had a flow rate of 174 g/10 min. and an ash level of 0.06 wt. %.

## Example VI

Several of the polymers described above were injection molded for a comparison of molded part properties. Polymer from Run 5 was used without any curing step. Polymer from Run 6 was cured by heating the polymer at about 168 to 196° C for 6.25 hours resulting in a flow rate of 211 g/10 min. A

relatively high molecular weight, essentially linear PPS prepared in a manner similar to that disclosed in U.S. 3,919,177, and thereafter acid-washed according to the method disclosed in U.S. 4,801,664, and then lightly cured and having a nominal melt flow rate of 200 g/10 min (Polymer 9), was included for comparison. Each polymer was dry blended to produce a mixture containing 57.35 wt % PPS, 40 wt % Owens Corning OC-497EE fiber glass, 0.6 wt % PEEK 380P (ICI), 1 wt % DHT-4A (Kyowa Industries), 0.25 wt % high density polyethylene, and 0.8 wt % Ucarsil TC-100 silane. The blend was extruded on a 1.5 inch diameter single screw extruder with a stock temperature of 327 °C and then chopped into pellets. After the pellets had been dried 92 hours at 150 °C, they were injection molded on an Arburg ECO injection molder with barrel temperature of 316 °C and a mold temperature of 135 °C. Parts were oven annealed at 200 °C for 2 hours.

The injection molded parts were evaluated for mechanical properties. Table III shows the results of the evaluation. Properties of the invention polymers from Runs 5 and 6 are similar to the properties of the commercial material.

Table III

Injection Molded Part Properties

| | 5 | 6 | 9 |
|---|---|---|---|
| Flow Rate, g/10 min. | 208[a] | 339 | b |
| Cured | c | 211 | 200 |
| Flexural modulus, MPa | 15,160 | 15,160 | 15,160 |
| Flexural strength, MPa | 268 | 289 | 278 |
| Tensile strength, MPa | 164 | 193 | 174 |
| Izod Impact, J/m | | | |
| Notched | 80 | 80 | 80 |
| Unnotched | 576 | 705 | 726 |

a Average of two measured melt flow rates
b Not determined
c Sample not cured

While this invention has been described in the Examples in detail for the purpose of illustration, the invention is not meant to be limited thereby, but is intended to cover all reasonable modifications within the scope and spirit of the invention.

## Claims

1. A process for preparing arylene sulfide polymers comprising the steps of:
   a) reacting at least one first alkali metal aminoalkanoate with a molar excess of hydrogen sulfide in a closed reaction vessel to obtain a first reaction product comprising alkali metal bisulfide, water, lactam and hydrogen sulfide,
   b) venting said reaction vessel to remove said hydrogen sulfide,
   c) reacting said alkali metal bisulfide with at least one second alkali metal aminoalkanoate to obtain a second reaction product comprising water, lactam and a polymerizable complex of said second alkali metal aminoalkanoate and said alkali metal bisulfide,
   d) dehydrating said second reaction product,
   e) contacting the dehydrated second reaction product with at least one dihaloaromatic compound to form a polymerization mixture, and

f) subjecting said polymerization mixture to polymerization to obtain the desired arylene sulfide polymers.

2. The process of claim 1 wherein the reaction conditions of step (a) employ a temperature from 150 to 250 ° C and a time period from 10 minutes to 4 hours, and the reaction conditions of step (c) employ a temperature from 100 to 250 ° C and a time period from 1 minute to 1 hour.

3. The process of any of the preceding claims wherein the molar ratio of hydrogen sulfide to first alkali metal aminoalkanoate in step (a) is at least 1.01:1.

4. The process of any of the preceding claims wherein prior to said venting in step (b), said first reaction product is cooled to a temperature such that all components of said first reaction product other than said hydrogen sulfide remain substantially in the liquid phase upon said venting.

5. The process of any of the preceding claims wherein the reaction in step (a) is done in the presence of an inert gas such that the pressure in said closed reaction vessel is increased to promote the reaction of hydrogen sulfide.

6. The process of claim 5 wherein said pressure increase caused by said inert gas is from 0.29 to 0.69 MPa gauge and said inert gas is nitrogen.

7. The process of any of the preceding claims wherein said first and said second alkali metal aminoalkanoates are represented by the formula $R'N(CR'_2)_tCO_2M$ wherein each R' is selected from hydrogen and hydrocarbyl radicals having 1 to 12 carbon atoms, M is an alkali metal, t is an integer having a value of 2 to 12, and the total number of carbon atoms in each molecule of said first and said second alkali metal aminoalkanoates is 3 to 24.

8. The process of any of the preceding claims wherein said first and said second alkali metal aminoalkanoates are produced by reacting an alkali metal hydroxide, a lactam, and water.

9. The process of any of the preceding claims wherein the molar ratio of said second alkali metal aminoalkanoate to said alkali metal bisulfide in said first reaction product is from 0.5:1 to 1.5:1, and the molar amount of said alkali metal bisulfide in said first reaction product is essentially equivalent to the molar amount of said first alkali metal aminoalkanoate employed.

10. The process of any of the preceding claims wherein said lactam has from 3 to 24 carbon atoms, said alkali metal bisulfide is selected from lithium, sodium, potassium, rubidium and cesium bisulfide, and said dihaloaromatic compound is selected from p-dichlorobenzene and mixtures of p-dichlorobenzene with a total of 0.1 to 10 mole percent of at least one of m-dichlorobenzene, o-dichlorobenzene, and alkyl-substituted dichlorobenzene having the formula

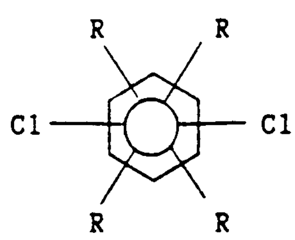

wherein R is hydrogen or an alkyl group having 1 to 4 carbon atoms, and at least one R is not hydrogen.

11. The process of any of the preceding claims wherein the molar ratio of said lactam present in the beginning of step (f) to said alkali metal bisulfide present in the beginning of step (c) is from 1:1 to 25:1, and the molar ratio of said dihaloaromatic compound present in the beginning of step (f) to said alkali metal bisulfide present in the beginning of step (c) is from 0.9:1 to 1.2:1.

**12.** The process of any of the preceding claims wherein said lactam is selected from N-methyl-2-pyrrolidone, N-ethyl-2-pyrrolidone, N-cyclohexyl-2-pyrrolidone, and N-methyl-ε-caprolactam.

**13.** The process of any of the preceding claims further comprising an alkali metal carboxylate, in particular wherein said alkali metal carboxylate is sodium acetate.

**14.** The process of any of the preceding claims further comprising a polyhaloaromatic compound represented by the formula

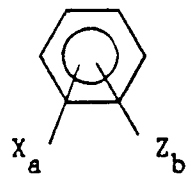

wherein X is a halogen selected from fluorine, chlorine, bromine, and iodine, a is 3 or 4, a+b is 6, and Z is selected from hydrogen, alkyl radicals having 1 to 4 carbon atoms, $-NH_2$ and -OR'' wherein R'' is an alkyl radical having 1 to 4 carbon atoms.

**15.** The process of any of the preceding claims for preparing poly(phenylene sulfide) comprising the steps of:

a) reacting sodium hydroxide, N-methyl-2-pyrrolidone and water to form a first mixture comprising sodium N-methyl-4-aminobutyrate, water and N-methyl-2-pyrrolidone,

b) reacting said sodium N-methyl-4-amino-butyrate contained said first mixture with a molar excess of hydrogen sulfide in a closed reaction vessel to produce a first reaction product comprising sodium bisulfide, hydrogen sulfide, water and N-methyl-2-pyrrolidone,

c) cooling said first reaction product and venting the reaction vessel to remove hydrogen sulfide wherein said first reaction product is cooled prior to said venting to a temperature such that all components of said first reaction product other than said hydrogen sulfide remain substantially in the liquid phase,

d) reacting sodium hydroxide, N-methyl-2-pyrrolidone and water to form a second mixture comprising sodium N-methyl-4-aminobutyrate, water and N-methyl-2-pyrrolidone,

e) reacting said second mixture with said sodium bisulfide to produce a second reaction product comprising water, N-methyl-2-pyrrolidone, and a polymerizable complex of sodium N-methyl-4-aminobutyrate and sodium bisulfide,

f) dehydrating said second reaction product,

g) contacting said dehydrated second reaction product with p-dichlorobenzene to form a polymerization mixture, and

h) subjecting said polymerization mixture to polymerization to produce said poly(phenylene sulfide).

European Patent Office

# EUROPEAN SEARCH REPORT

Application Number

EP 92 11 6165

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | US-A-5 023 315 (J. G. CEURVORST AND L. E. SCOGGINS)<br>* claims *<br>--- | 1-15 | C08G75/02 |
| D,A | EP-A-0 039 508 (PHILLIPS PETROLEUM COMPANY)<br>* claims *<br>--- | 1-15 | |
| D,A | US-A-3 884 884 (L. E. SCOGGINS AND R. W. CAMPELL)<br>--- | | |
| A | EP-A-0 086 487 (PHILLIPS PETROLEUM COMPANY)<br>--- | | |
| A | US-A-4 451 643 (J. T. EDMONDS)<br>--- | | |
| A | US-A-3 867 356 (R. W. CAMPELL)<br>----- | | |

TECHNICAL FIELDS SEARCHED (Int. Cl.5 )

C08G

The present search report has been drawn up for all claims

| Place of search | Date of completion of the search | Examiner |
|---|---|---|
| THE HAGUE | 05 JANUARY 1993 | KLIER E.K. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..............................................................
& : member of the same patent family, corresponding document